# EUROPEAN PATENT APPLICATION

(11) **EP 3 438 141 A1**
(43) Date of publication of application: **06.02.2019**
(21) Application number: 17775572.5
(22) Date of filing: 31.03.2017
(51) Int. Cl.: C08F 216/38, C03C 27/12, C08F 8/28, C08F 8/44, C08L 29/14

(54) **POLYVINYL ACETAL IONOMER RESIN MATERIAL, POLYVINYL ACETAL IONOMER RESIN FILM, AND LAMINATED GLASS**

(30) Priority: 31.03.2016 JP 2016070660
(71) Applicant: Sekisui Chemical Co., Ltd., Osaka-shi, Osaka 530-8565 (JP)
(72) Inventor: SHINDO, Kaoru, Mishima-gun Osaka 618-0021 (JP); NAGAI, Yasuharu, Mishima-gun Osaka 618-0021 (JP)
(74) Representative: Ter Meer Steinmeister & Partner
(86) International application number: PCT/JP2017/013710
(87) International publication number: WO 2017/171041

(57) **Abstract**

Provided is a polyvinyl acetal ionomer resin material capable of enhancing the shock resistance at low temperature. A polyvinyl acetal ionomer resin material according to the present invention includes a polyvinyl acetal ionomer resin having an ionic functional group and having a metal in an amount that makes a degree of neutralization be 10% or more and 90% or less, and the polyvinyl acetal ionomer resin has a meso percentage of acetal ring structure of 80% or more.

## Description

### TECHNICAL FIELD

The present invention relates to an interlayer film for laminated glass which is used for obtaining laminated glass. Moreover, the present invention relates to laminated glass prepared with the interlayer film for laminated glass.

### BACKGROUND ART

Resin films are used in various use applications. As a resin film for use in laminated glass, an interlayer film for laminated glass is known. Laminated glass is produced by sandwiching an interlayer film for laminated glass between two glass plates.

Since the laminated glass generates only a small amount of scattering glass fragments even when subjected to external impact and broken, laminated glass is excellent in safety. For that reason, the laminated glass is widely used for automobiles, railway vehicles, aircraft, ships, buildings, and the like.

Examples of the interlayer film for laminated glass include a single-layered interlayer film having a one-layer structure and a multi-layered interlayer film having a two or more-layer structure.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount greater than 30 parts by weight. This sound insulating layer can be used alone as a single-layered interlayer film.

Furthermore, the following Patent Document 1 also describes a multi-layered interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount of 30 parts by weight or less.

The following Patent Document 2 discloses an interlayer film which is constituted of a polymer layer having a glass transition temperature of 33°C or more. Patent Document 2 indicates that the polymer layer is disposed between glass plates having a thickness of 4.0 mm or less.

Patent Document 3 discloses a polyvinyl butyral blend containing a polyvinyl butyral component having a chemically bound ionomer group.

### Related Art Documents

### Patent Documents

Patent Document 1: JP 2007-070200 A
Patent Document 2: US2013/0236711A1
Patent Document 3: US4969744

### SUMMARY OF THE INVENTION

### PROBLEMS TO BE SOLVED BY THE INVENTION

Conventional interlayer films (resin films) as described in Patent Documents 1, 2 have a problem that the shock resistance is low and a scratch or a crack is generated by application of a shock. In particular, the shock resistance at low temperature of about -40°C tends to be low.

It is an object of the present invention to provide a polyvinyl acetal ionomer resin material capable of enhancing the shock resistance at low temperature. It is also an object of the present invention to provide a polyvinyl acetal ionomer resin film and laminated glass prepared with the polyvinyl acetal ionomer resin material.

### MEANS FOR SOLVING THE PROBLEMS

According to a broad aspect of the present invention, there is provided a polyvinyl acetal ionomer resin material (hereinafter, also referred to as a resin material), comprising a polyvinyl acetal ionomer resin having an ionic functional group and having a metal in an amount that makes a degree of neutralization be 10% or more and 90% or less, the polyvinyl acetal ionomer resin having a meso percentage of acetal ring structure of 80% or more.

In a specific aspect of the resin material according to the present invention, the polyvinyl acetal ionomer resin has a content of the ionic functional group of 10% by mole or less.

In a specific aspect of the resin material according to the present invention, the ionic functional group is a carboxyl group, a base of carboxyl group, a sulfonic acid group, a base of sulfonic acid group, a sulfinic acid group, a base of sulfinic acid group, a sulfenic acid group, a base of sulfenic acid group, a phosphoric acid group, a base of phosphoric acid group, a phosphonic acid group, a base of phosphonic acid group, an amino group, or a base of amino group.

In a specific aspect of the resin material according to the present invention, the metal is Na, Li, K, Mg, Zn, Cu, Co, Al, Fe, Ni, Cr or Mn.

In a specific aspect of the resin material according to the present invention, the polyvinyl acetal ionomer resin has a content of hydroxyl group of 10% by mole or more and 35% by mole or less.

In a specific aspect of the resin material according to the present invention, the acetal group of the polyvinyl acetal ionomer resin is a formal group, an acetoacetal group, a butyral group, a cyclohexyl acetal group, a 2-ethylhexyl acetal group, or a benzacetal group.

In a specific aspect of the resin material according to the present invention, the polyvinyl acetal ionomer resin has a weight average molecular weight of 100000 or more and 500000 or less.

In a specific aspect of the resin material according to the present invention, the resin material includes a polyvinyl acetal resin not having an ionic functional group.

In a specific aspect of the resin material according to the present invention, a content of the polyvinyl acetal ionomer resin in 100% by weight of a sum of the polyvinyl acetal ionomer resin and the polyvinyl acetal resin is 50% by weight or more.

In a specific aspect of the resin material according to the present invention, the resin material includes a plasticizer.

In a specific aspect of the resin material according to the present invention, a content of the plasticizer relative to 100 parts by weight of a sum of the polyvinyl acetal ionomer resin and a thermoplastic resin other than the polyvinyl acetal ionomer resin is 10 parts by weight or more.

In a specific aspect of the resin material according to the present invention, the plasticizer includes triethylene glycol-di-2-ethylhexanoate.

According to a broad aspect of the present invention, a polyvinyl acetal ionomer resin film that is a molded body of the above-described polyvinyl acetal ionomer resin material is provided.

It is preferred that the polyvinyl acetal ionomer resin film according to the present invention be an interlayer film for laminated glass used for obtaining laminated glass.

According to a broad aspect of the present invention, there is provided laminated glass including a first lamination glass member, a second lamination glass member and the polyvinyl acetal ionomer resin film described above, the polyvinyl acetal ionomer resin film being arranged between the first lamination glass member and the second lamination glass member.

### EFFECT OF THE INVENTION

Since the polyvinyl acetal ionomer resin material according to the present invention includes a polyvinyl acetal ionomer resin having an ionic functional group and having a metal in an amount that makes a degree of neutralization be 10% or more and 90% or less, and the polyvinyl acetal ionomer resin has a meso percentage of acetal ring structure of 80% or more, it is possible to heighten the shock resistance at low temperature.

### BRIEF DESCRIPTION OF DRAWINGS

Fig. 1 is a sectional view schematically showing a polyvinyl acetal ionomer resin film according to the first embodiment of the present invention.
Fig. 2 is a sectional view schematically showing a polyvinyl acetal ionomer resin film according to the second embodiment of the present invention.
Fig. 3 is a sectional view schematically showing one example of laminated glass prepared with the polyvinyl acetal ionomer resin film shown in Fig. 1.
Fig. 4 is a sectional view schematically showing one example of laminated glass prepared with the polyvinyl acetal ionomer resin film shown in Fig. 2.

### MODE(S) FOR CARRYING OUT THE INVENTION

Hereinafter, the present invention will be described in detail.

The polyvinyl acetal ionomer resin material according to the present invention (also referred to as resin material) includes a polyvinyl acetal ionomer resin having an ionic functional group and having a metal in an amount that makes a degree of neutralization be 10% or more and 90% or less. In the polyvinyl acetal ionomer resin, it is preferred that the ionic functional group and the metal be ionically bonded to each other. The polyvinyl acetal ionomer resin is a metal-containing polyvinyl acetal ionomer resin.

The resin material according to the present invention is a resin substance including the polyvinyl acetal ionomer resin. The resin material according to the present invention may be solely the polyvinyl acetal ionomer resin. The resin material according to the present invention may include a thermoplastic resin other than the polyvinyl acetal ionomer resin, and a plasticizer.

It is preferred that the resin material according to the present invention be used for an interlayer film for laminated glass (hereinafter, also referred to as interlayer film). The interlayer film is used for obtaining laminated glass. The polyvinyl acetal ionomer resin film according to the present invention (hereinafter, also referred to as resin film) is obtained by molding the polyvinyl acetal ionomer resin material. The resin film is a molded body of the resin material. It is preferred that the resin film according to the present invention be an interlayer film used for obtaining laminated glass. However, the use of the resin film according to the present invention is not limited to an interlayer film. The resin film according to the present invention can be used, for example, as a sealing agent for solar battery, a coating agent, a cushioning material, or the like besides an interlayer film.

In the present invention, since the above configuration is provided, it is possible to heighten the shock resistance at low temperature of the resin film and the interlayer film by the energy absorption by the breakage of the ionic bonding even at low temperature. Also, it is possible to heighten the shock resistance of the resin film and the interlayer film over a broad range of temperatures. Further, in the present invention, since the above configuration is provided, even if the ionic bonding is broken, the self-repairability can be improved by regeneration of ionic bonding with the neighboring ion group. The self-repairability means diminishment or disappearance of a scratch or a deformation when such a scratch or a deformation is generated, for example, in the resin film and the interlayer film. Further, in the present invention, since the polyvinyl acetal ionomer resin is ionomerized, the modulus of elasticity, the elongation at break, and the flexural rigidity of the resin film and the interlayer film also heighten.

The polyvinyl acetal ionomer resin is an ionomerized polyvinyl acetal resin. It is preferred that the polyvinyl acetal ionomer resin contain polyvinyl acetal into which an acid group is introduced.

The polyvinyl acetal ionomer resin has, for example, a -CH₂-CH- group in a main chain. The polyvinyl acetal ionomer resin has a polyvinyl acetal skeleton. The polyvinyl acetal skeleton has, for example, a -CH₂-CH- group in a main chain. To the carbon atom in the "-CH-" moiety in a -CH₂-CH- group, another group is bound. In the polyvinyl acetal ionomer resin, it is preferred that -CH₂-CH- groups be consecutive in the main chain.

The polyvinyl acetal ionomer resin has a degree of neutralization of 10% or more and 90% or less. By setting the degree of neutralization to the above-described lower limit or more and the above-described upper limit or less, the effect of the present invention is exerted. The degree of neutralization is preferably 15% or more, more preferably 20% or more and is preferably 80% or less, more preferably 70% or less. When the degree of neutralization is the above-described lower limit or more, the shock resistance at low temperature and the self-repairability effectively heighten. When the degree of neutralization is the above-described upper limit or less, flexibility is attained, and further the elongation at break at the time of tensile deformation and the formability are improved.

The degree of neutralization can be determined by using FT-IR or the like. In FT-IR, it is possible to calculate a degree of neutralization, for example, from the height of the signal of the carboxyl group (1715 cm⁻¹), and the height of the signal of the metal salt of the carboxyl group (different depending on the metal, 1568 cm⁻¹ in the case of Zn, 1550 cm⁻¹ in the case of Na).

For the above neutralization, metal is used. From the view point of effectively enhancing the shock resistance at low temperature and the self-repairability, the metal is preferably Na, Li, K, Mg, Zn, Cu, Co, Al, Fe, Ni, Cr or Mn. It is preferred that the metal contain, in particular, Na.

The polyvinyl acetal ionomer resin has a meso percentage of acetal ring structure of 80% or more. From the view point of effectively enhancing the shock resistance at low temperature and the self-repairability, the meso percentage is preferably 83% or more, more preferably 85% or more, particularly preferably 91% or more. In the present invention, "meso percentage" of acetal ring structure means, in a steric structure of the acetal ring, a percentage of quantity of an acetal group having an acetal ring structure formed of a hydroxyl group having an isotactic structure (meso acetal ring), relative to 100% of a sum of a percentage of quantity of an acetal group having an acetal ring structure formed of a hydroxyl group having a syndiotactic structure (racemo acetal ring) and a percentage of quantity of an acetal group having an acetal ring structure formed of a hydroxyl group having an isotactic structure (meso acetal ring). The meso percentage can be determined, for example, by dissolving the polyvinyl acetal ionomer resin in a solvent such as dimethyl sulfoxide-d6, measuring proton NMR at a measurement temperature of 150°C, and calculating from an integrated value of the peak originated from the meso acetal ring structure appearing around 4.5 ppm and the peak originated from the racemo acetal ring structure appearing around 4.2 ppm, or measuring carbon NMR, and calculating from an integrated value of the peak originated from the meso acetal ring structure appearing around 100 ppm and the peak originated from the racemo acetal ring structure appearing around 94 ppm.

In order to make the meso percentage of an acetal ring structure in the polyvinyl acetal unit fall within the above range, it is necessary to appropriately adjust the acetalization degree, and too low or too high acetalization degree is unfavorable, and also too low or too high hydroxyl group amount is unfavorable. In order to achieve an appropriate range of meso percentage, the acetalization degree ranges from 50 to 80% by mole, and the hydroxyl group amount ranges from 10 to 40% by mole. Also, in order to adjust the meso percentage, it is effective to appropriately adjust the aging temperature and the aging time of the acetalization step, and by adjusting these, it is possible to obtain an intended meso percentage. In particular, when the aging temperature is low, and the aging time is short, the meso percentage can come out of the above range.

Examples of the method for producing the polyvinyl acetal ionomer resin include a method including copolymerization of polyvinyl acetate and a monomer having a group that can become an ionic functional group, saponification, acetalization with an aldehyde, and ionomerization, a method including acetalization of polyvinyl alcohol (PVA) with an aldehyde having a group that can become an ionic functional group, and ionomerization, and a method including acetalization of polyvinyl acetal with an aldehyde having group that can become an ionic functional group, and ionomerization.

Examples of the method for ionomerization include a method of adding a metal-containing compound into a solution, and a method of adding a metal-containing compound during kneading. The metal-containing compound may be added in a state of a solution.

It is preferred that the metal-containing compound be a metal salt or a metal oxide.

Examples of the metal in the metal-containing compound include, but are not particularly limited to, alkali metals, alkali earth metals and transition metals. From the view point of further improving the Young's modulus and the formability, Na, Li, K, Mg, Zn, Cu, Co, Al, Fe, Ni, Cr or Mn is preferred. It is preferred that the polyvinyl acetal ionomer resin contain Na, Zn, Mg or K. It is preferred that the above metal be used for ionomerization. It is particularly preferred that Na be used.

For example, the polyvinyl alcohol can be obtained by saponifying polyvinyl acetate. The saponification degree of the polyvinyl alcohol generally falls within the range of 70 to 99.9% by mole.

For effectively attaining the effect of the ionomerization and effectively attaining the effect of the present invention, it is preferred that the ionic functional group be a carboxyl group, a base of carboxyl group, a sulfonic acid group, a base of sulfonic acid group, a sulfinic acid group, a base of sulfinic acid group, a sulfenic acid group, a base of sulfenic acid group, a phosphoric acid group, a base of phosphoric acid group, a phosphonic acid group, a base of phosphonic acid group, an amino group, or a base of amino group.

From the view point of effectively enhancing the shock resistance at low temperature and the self-repairability, the polyvinyl acetal ionomer resin has a content of the ionic functional group of preferably 20% by mole or less, more preferably 10% by mole or less, further preferably 5% by mole or less.

The content of the ionic functional group means a sum of a percentage of the group that can become an ionic functional group in the resin, and a percentage of the ionic functional group constituting the metal salt of the ionic functional group. The content of the ionic functional group can be determined by using NMR or the like. For example, the content of the ionic functional group can be calculated from an integrated value of the peak originated from the ionic functional group (appearing around 45 ppm in the carboxyl group) and the peak originated from the main chain appearing around 30 ppm in carbon NMR.

From the view point of effectively enhancing the shock resistance at low temperature and the self-repairability, the polyvinyl acetal ionomer resin has a content of the hydroxyl group of preferably 10% by mole or more and 35% by mole or less.

From the view point of effectively enhancing the shock resistance at low temperature and the self-repairability, it is preferred that the acetal group of the polyvinyl acetal ionomer resin be a formal group, an acetoacetal group, a butyral group, a cyclohexyl acetal group, a 2-ethylhexyl acetal group, or a benzacetal group.

The resin film according to the present invention has a one-layer structure or a two or more-layer structure. The resin film according to the present invention may have a one-layer structure and may have a two or more-layer structure. The resin film according to the present invention may have a two-layer structure and may have a three or more-layer structure. The resin film according to the present invention may be a single-layered resin film or a multi-layered resin film.

The resin film may be provided only with a first layer, or provided with a second layer in addition to the first layer. It is preferred that the resin film be further provided with the second layer. When the resin film is provided with the second layer, the second layer is arranged on a first surface side of the first layer.

The resin film may be provided with a third layer in addition to the first layer and the second layer. It is preferred that the resin film be further provided with a third layer. When the resin film is provided with the second layer and the third layer, the third layer is arranged on a second surface side opposite to the first surface of the first layer.

It is preferred that the surface opposite to the first layer side of the second layer be a surface on which a lamination glass member or a glass plate is laminated. It is preferred that the thickness of the glass plate laminated on the second layer be 2.0 mm or less. The second surface that is opposite to the first surface (surface of second layer side) of the first layer may be a surface on which a lamination glass member or a glass plate is laminated. It is preferred that the thickness of the glass plate laminated on the first layer be 2.0 mm or less. It is preferred that the surface opposite to the first layer side of the third layer be a surface on which a lamination glass member or a glass plate is laminated. It is preferred that the thickness of the glass plate laminated on the third layer be 2.0 mm or less.

It is preferred that the resin film be an interlayer film for laminated glass used for obtaining laminated glass by being arranged between the first glass plate and the second glass plate. It is preferred that the sum of the thickness of the first glass plate and the thickness of the second glass plate be 4 mm or less because the flexural rigidity can be made sufficiently high owing to the resin film. It is preferred that the resin film be an interlayer film for laminated glass used for obtaining laminated glass by being arranged between the first glass plate and the second glass plate. It is preferred that the resin film be an interlayer film for laminated glass used for obtaining laminated glass by being arranged between a first glass plate having a thickness of 1.8 mm or less, and a second glass plate because the flexural rigidity can be made sufficiently high owing to the resin film. It is preferred that the resin film be an interlayer film for laminated glass used for obtaining laminated glass by being arranged between the first glass plate having a thickness of 1.8 mm or less, and the second glass plate having a thickness of 1.8 mm or less because the flexural rigidity can be made sufficiently high owing to the resin film.

Hereinafter, specific embodiments of the present invention will be described with reference to the drawings.

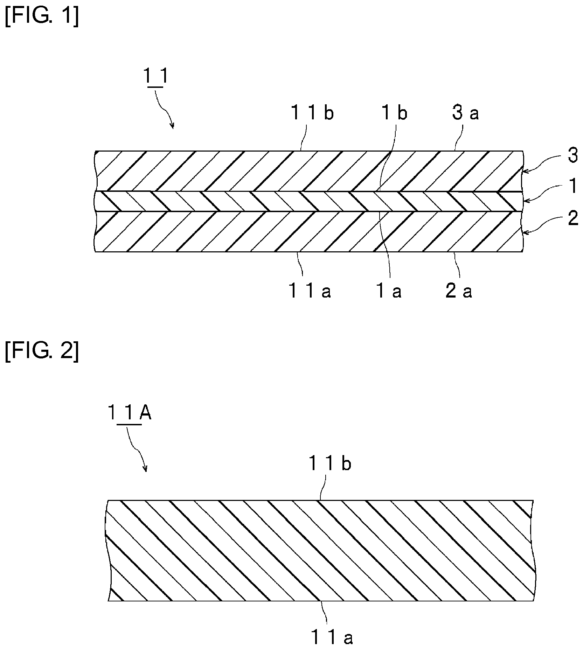

Fig. 1 is a sectional view schematically showing a polyvinyl acetal ionomer resin film according to the first embodiment of the present invention.

A resin film 11 shown in Fig. 1 is a multi-layered resin film having a two or more-layer structure. It is preferred that the resin film 11 be an interlayer film for laminated glass for obtaining laminated glass. The resin film 11 is provided with a first layer 1, a second layer 2, and a third layer 3. The second layer 2 is arranged on a first surface 1a of the first layer 1 to be layered thereon. The third layer 3 is arranged on a second surface 1b at the opposite side of the first surface 1a of the first layer 1 to be layered thereon. The first layer 1 is an intermediate layer. Each of the second layer 2 and the third layer 3 is a protective layer and is a surface layer in the present embodiment. The first layer 1 is arranged between the second layer 2 and the third layer 3 to be sandwiched therebetween. Accordingly, the resin film 11 has a multilayer structure (second layer 2/first layer 1/third layer 3) in which the second layer 2, the first layer 1, and the third layer 3 are layered in this order.

In this connection, other layers may be arranged between the second layer 2 and the first layer 1 and between the first layer 1 and the third layer 3, respectively. It is preferred that the second layer 2 and the first layer 1, and the first layer 1 and the third layer 3 be directly layered. Examples of the above other layer include a layer containing polyethylene terephthalate and the like.

Fig. 2 is a sectional view schematically showing a polyvinyl acetal ionomer resin film according to the second embodiment of the present invention.

A resin film 11A shown in Fig. 2 is a monolayer resin film having a one-layer structure. The resin film 11A is singly constituted by a first layer. It is preferred that the resin film 11A be an interlayer film for laminated glass used for obtaining laminated glass.

Hereinafter, other details of the first layer, the second layer, and the third layer which constitute the resin film according to the present invention, and other details of each ingredient contained in the first layer, the second layer and the third layer will be described.

### (Resin)

The resin material and the resin film contain a polyvinyl acetal ionomer resin. It is preferred that the polyvinyl acetal ionomer resin be a polyvinyl butyral ionomer resin. It is preferred that the first layer, the second layer, and the third layer contain a resin. Examples of the resin include thermosetting resins and thermoplastic resins. The resin material and the resin film may contain a polyvinyl acetal resin. It is preferred that the polyvinyl acetal resin be a polyvinyl butyral resin. One kind of each of the polyvinyl acetal ionomer resin, the above-described resin, and the polyvinyl acetal resin and the above-described resin may be used alone and two or more kinds thereof may be used in combination.

A weight average molecular weight of the polyvinyl acetal ionomer resin and the above-described resin is preferably 30000 or more, more preferably 100000 or more, further preferably 120000 or more, and is preferably 1500000 or less, more preferably 1300000 or less, further preferably 1200000 or less, particularly preferably 1000000 or less, most preferably 500000 or less. When the weight average molecular weight is the above-described lower limit or more and the above-described upper limit or less, it is possible to easily obtain the resin film by extrusion molding, and more excellent shock resistance can be attained.

The weight average molecular weight refers to a weight average molecular weight, calculated on the polystyrene equivalent basis, measured by gel permeation chromatography (GPC) .

When a resin other than the polyvinyl acetal ionomer resin is used, the resin is preferably a thermoplastic resin, and is preferably a polyvinyl acetal resin, a (meth)acrylic resin such as an acrylic polymer, an urethane polymer, a silicone polymer, rubber, or vinyl acetate polymer, and is more preferably a polyvinyl acetal resin or a (meth)acrylic resin, and is further preferably a polyvinyl acetal resin. By using the polyvinyl acetal resin, the toughness is effectively enhanced, and the shock resistance and the penetration resistance of the laminated glass are further enhanced.

It is preferred that the resin have a polar group, and the resin have a hydroxyl group. Existence of such a group not only causes appearance of the self-repairability by hydrogen bond breakage and regeneration, but also further heightens the shock resistance at low temperature, and the flexural rigidity and the penetration resistance of the laminated glass.

It is preferred that the acrylic polymer be a polymer of a polymerizing component including a (meth)acrylic ester. It is preferred that the acrylic polymer be a poly(meth)acrylic ester.

The poly(meth)acrylic ester is not particularly limited. Examples of the poly(meth)acrylic ester include poly(methyl (meth)acrylate), poly(ethyl (meth)acrylate), poly(n-propyl (meth)acrylate), poly(i-propyl (meth)acrylate), poly(n-butyl (meth)acrylate), poly(i-butyl (meth)acrylate), poly(t-butyl (meth)acrylate), poly(2-ethylhexyl (meth)acrylate), poly(octyl (meth)acrylate), poly(propyl (meth)acrylate), poly(2-ethyloctyl (meth)acrylate), poly(nonyl (meth)acrylate), poly(isononyl (meth)acrylate), poly(decyl (meth)acrylate), poly(isodecyl (meth)acrylate), poly(lauryl (meth)acrylate), poly(isotetradecyl (meth)acrylate), poly(cyclohexyl (meth)acrylate), poly(2-hydroxyethyl (meth)acrylate), poly(4-hydroxybutyl (meth)acrylate), and poly(benzyl (meth)acrylate). For the ease of mixing into the polyvinyl acetal ionomer, a polyacrylic ester is preferred, and poly (meth)acrylic acid, poly(ethyl acrylate), poly(n-butyl acrylate), poly(2-hydroxyethyl poly(meth)acrylate), poly(4-hydroxybutyl (meth)acrylate), poly(2-ethylhexyl acrylate) or poly(octyl acrylate) is more preferred. It is preferred that the interlayer film contain such a preferable acrylic polymer. By using such a preferable poly(meth)acrylic ester, the balance of the productivity of the resin film and the characteristics of the resin film is further improved. One kind of the poly (meth) acrylic ester may be used alone, and two or more kinds thereof may be used in combination.

The first layer preferably contains a thermoplastic resin (hereinafter, sometimes described as the thermoplastic resin (1)), preferably contains as the thermoplastic resin (1), a polyvinyl acetal resin (hereinafter, sometimes described as the polyvinyl acetal resin (1)), more preferably contains, as the thermoplastic resin (1), a polyvinyl acetal ionomer resin (hereinafter, sometimes described as the polyvinyl acetal ionomer resin (1)). The second layer preferably contains a thermoplastic resin (hereinafter, sometimes described as the thermoplastic resin (2)), preferably contains as the thermoplastic resin (2), a polyvinyl acetal resin (hereinafter, sometimes described as the polyvinyl acetal resin (2)), more preferably contains, as the thermoplastic resin (2), a polyvinyl acetal ionomer resin (hereinafter, sometimes described as the polyvinyl acetal ionomer resin (2)). The third layer preferably contains a thermoplastic resin (hereinafter, sometimes described as the thermoplastic resin (3)), preferably contains as the thermoplastic resin (3), a polyvinyl acetal resin (hereinafter, sometimes described as the polyvinyl acetal resin (3)), more preferably contains, as the thermoplastic resin (3), a polyvinyl acetal ionomer resin (hereinafter, sometimes described as the polyvinyl acetal ionomer resin (3)).

Examples of the thermoplastic resin include a polyvinyl acetal resin, an ethylene-vinyl acetate copolymer resin, an ethylene-acrylate copolymer resin, a (meth)acrylic resin, a vinyl acetate copolymer, a polyurethane resin, a polyvinyl alcohol resin, and the like. Thermoplastic resins other than these may be used.

The polyvinyl acetal ionomer resin and the polyvinyl acetal resin can be produced, for example, by acetalizing polyvinyl alcohol with an aldehyde. It is preferred that the polyvinyl acetal ionomer resin and the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol (PVA) is preferably 200 or more, more preferably 500 or more, even more preferably 1500 or more, further preferably 1600 or more, particularly preferably 2600 or more, and most preferably 2700 or more and is preferably 5000 or less, more preferably 4000 or less, and further preferably 3500 or less. When the average polymerization degree is the above-described lower limit or more, the shock resistance at low temperature and the penetration resistance of laminated glass are further enhanced. When the average polymerization degree is the above-described upper limit or less, molding of a resin film is facilitated.

The average polymerization degree of the polyvinyl alcohol is determined by a method in accordance with JIS K6726 "Testing methods for polyvinyl alcohol".

It is preferred that the number of carbon atoms of the acetal group in the polyvinyl acetal resin fall within the range of 2 to 10 and it is more preferred that the number of carbon atoms of the acetal group fall within the range of 2 to 5.

In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Acetaldehyde, propionaldehyde, n-butyraldehyde, isobutyraldehyde, n-hexylaldehyde or n-valeraldehyde is preferred, acetaldehyde, propionaldehyde, n-butyraldehyde, isobutyraldehyde or n-valeraldehyde is more preferred, and n-butyraldehyde or n-valeraldehyde is further preferred. One kind of the aldehyde may be used alone, and two or more kinds thereof may be used in combination.

The content of the hydroxyl group (the amount of hydroxyl groups) of the polyvinyl acetal resin (1) and the polyvinyl acetal ionomer resin (1) is preferably 2% by mole or more, more preferably 5% by mole or more, and further preferably 10% by mole or more and is preferably 45% by mole or less, more preferably 40% by mole or less, further preferably 35% by mole or less. When the content of the hydroxyl group is the above-described lower limit or more, the mechanical strength of the resin film is further enhanced. In particular, when the content of the hydroxyl group of the polyvinyl acetal resin (1) and the polyvinyl acetal ionomer resin (1) is 5% by mole or more, the reaction efficiency is high, and the productivity is excellent, and when the content of the hydroxyl group is 35% by mole or less, ionomer can be formed effectively, and not only the shock resistance but also excellent self-repairability are attained. Moreover, when the content of the hydroxyl group is the above-described upper limit or less, the flexibility of the resin film is enhanced and the handling of the resin film is facilitated.

The content of the hydroxyl group of each of the polyvinyl acetal resin(2), the polyvinyl acetal ionomer resin(2), the polyvinyl acetal resin(3) and the polyvinyl acetal ionomer resin (3) is preferably 10% by mole or more, more preferably 13% by mole or more, more preferably 15% by mole or more, still more preferably 18% by mole or more, further preferably 20% by mole or more, particularly preferably 22% by mole or more, and is preferably 37% by mole or less, more preferably 36.5% by mole or less, further preferably 36% by mole or less. When the content of the hydroxyl group is the above-described lower limit or more, the flexural rigidity of the laminated glass is further enhanced, and the glass adhesive strength of the resin film is further enhanced. In particular, when the content of the hydroxyl group of each of the polyvinyl acetal resin (2), the polyvinyl acetal ionomer resin (2), the polyvinyl acetal resin (3) and the polyvinyl acetal ionomer resin (3) is 10% by mole or more, the reaction efficiency is high, and the productivity is excellent, and when the content of the hydroxyl group is 37% by mole or less, ionomer can be formed effectively, and not only the shock resistance but also excellent self-repairability are attained. Moreover, when the content of the hydroxyl group is the above-described upper limit or less, the flexibility of the resin film is enhanced and the handling of the resin film is facilitated.

For more effectively attaining the sound insulating properties, it is preferred that the content of the hydroxyl group in the polyvinyl acetal resin (1) and the polyvinyl acetal ionomer resin (1) be lower than the content of the hydroxyl group of the polyvinyl acetal resin (2), the polyvinyl acetal ionomer resin (2), the polyvinyl acetal resin (3) and the polyvinyl acetal ionomer resin (3). From the viewpoint of further enhancing the sound insulating properties, an absolute value of the difference between the content of the hydroxyl group of the polyvinyl acetal resin (1) and the polyvinyl acetal ionomer resin (1) and the content of the hydroxyl group of the polyvinyl acetal resin (2), the polyvinyl acetal ionomer resin (2), the polyvinyl acetal resin (3) and the polyvinyl acetal ionomer resin (3) is preferably 1% by mole or more, more preferably 5% by mole or more, further preferably 9% by mole or more, particularly preferably 10% by mole or more and most preferably 12% by mole or more. It is preferred that an absolute value of the difference between the content of the hydroxyl group in the polyvinyl acetal resin (1) and the polyvinyl acetal ionomer resin (1) and the content of the hydroxyl group of the polyvinyl acetal resin (2), the polyvinyl acetal ionomer resin (2), the polyvinyl acetal resin (3) and the polyvinyl acetal ionomer resin (3) be 20% by mole or less.

The content of the hydroxyl group is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) and the polyvinyl acetal ionomer resin (1) is preferably 0.05% by mole or more, more preferably 0.1% by mole or more, further preferably 1% by mole or more and is preferably 25% by mole or less, more preferably 30% by mole or less, and further preferably 20% by mole or less. When the acetylation degree is the above-described lower limit or more, the compatibility between the resin and a plasticizer is enhanced. When the acetylation degree is the above-described upper limit or less, with regard to the resin film and laminated glass, the moisture resistance thereof is enhanced. In particular, when the acetylation degree of the polyvinyl acetal resin (1) and the polyvinyl acetal ionomer resin (1) is 0.1% by mole or more and 25% by mole or less, excellent shock resistance and penetration resistance of the laminated glass are achieved.

The acetylation degree of each of the polyvinyl acetal resin (2), the polyvinyl acetal ionomer resin (2), the polyvinyl acetal resin (3) and the polyvinyl acetal ionomer resin (3) is preferably 0.01% by mole or more, more preferably 0.5% by mole or more and is preferably 10% by mole or less, more preferably 2% by mole or less. When the acetylation degree is the above-described lower limit or more, the compatibility between the resin and a plasticizer is enhanced. When the acetylation degree is the above-described upper limit or less, with regard to the resin film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree (butyralization degree in the case of polyvinyl butyral resin) of the polyvinyl acetal resin (1) and the polyvinyl acetal ionomer resin (1) is preferably 45% by mole or more, more preferably 50% by mole or more, further preferably 55% by mole or more and is preferably 90% by mole or less, more preferably 80% by mole or less, further preferably 70% by mole or less. When the acetalization degree is the above-described lower limit or more, the compatibility between the resin and a plasticizer is enhanced. When the acetalization degree is the above-described upper limit or less, the reaction time required for producing the polyvinyl acetal resin is shortened.

The acetalization degree (butyralization degree in the case of polyvinyl butyral resin) of each of the polyvinyl acetal resin (2), the polyvinyl acetal ionomer resin (2), the polyvinyl acetal resin (3) and the polyvinyl acetal ionomer resin (3) is preferably 55% by mole or more, more preferably 60% by mole or more and is preferably 75% by mole or less, more preferably 71% by mole or less. When the acetalization degree is the above-described lower limit or more, the compatibility between the resin and a plasticizer is enhanced. When the acetalization degree is the above-described upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When a polyvinyl butyral ionomer resin or a polyvinyl butyral resin is used, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

The resin material may contain a thermoplastic resin other than the polyvinyl acetal ionomer resin, as well as the polyvinyl acetal ionomer resin.

When the resin material contains a thermoplastic resin other than the polyvinyl acetal ionomer resin, a content of the polyvinyl acetal ionomer resin in 100% by weight of a sum of the polyvinyl acetal ionomer resin and the thermoplastic resin other than the polyvinyl acetal ionomer resin is preferably 1% by weight or more, more preferably 5% by weight or more, further preferably 10% by weight or more, particularly preferably 30% by weight or more, most preferably 50% by weight or more.

The resin material may contain a polyvinyl acetal resin not having an ionic functional group, as well as the polyvinyl acetal ionomer resin.

When the resin material contains a polyvinyl acetal resin not having an ionic functional group, a content of the polyvinyl acetal ionomer resin in 100% by weight of a sum of the polyvinyl acetal ionomer resin and the polyvinyl acetal resin is preferably 1% by weight or more, more preferably 5% by weight or more, further preferably 10% by weight or more, particularly preferably 30% by weight or more, most preferably 50% by weight or more.

### (Plasticizer)

It is preferred that the resin material and the resin film contain a plasticizer. It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By the use of the plasticizer or further by using a resin and a plasticizer together, the adhesive force of a layer containing the polyvinyl acetal resin and the plasticizer to a lamination glass member or another layer is moderately enhanced. The plasticizer is not particularly limited. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

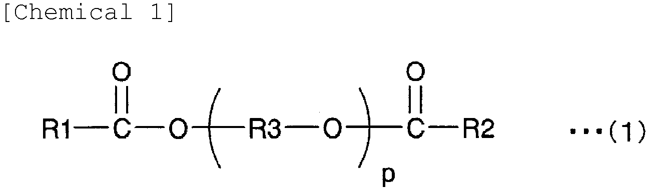

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

In the resin material and the resin film, the content of the plasticizer relative to 100 parts by weight of a sum of the polyvinyl acetal ionomer resin, and the thermoplastic resin other than the polyvinyl acetal ionomer resin is preferably 10 parts by weight or more, more preferably 20 parts by weight or more, further preferably 30 parts by weight or more and is preferably 90 parts by weight or less, more preferably 85 parts by weight or less, further preferably 80 parts by weight or less. When the content is the above-described lower limit or more, the flexibility of the resin film is enhanced and the handling of the resin film is facilitated. When the content is the above-described upper limit or less, formation of the ionomer is less likely to be hindered, and excellent shock resistance at low temperature and self-repairability is attained. When the resin material and the resin film do not contain a thermoplastic resin other than the polyvinyl acetal ionomer resin, 100 parts by weight of a sum of the polyvinyl acetal ionomer resin and a thermoplastic resin other than the polyvinyl acetal ionomer resin indicates 100 parts by weight of the polyvinyl acetal ionomer resin.

Each of the content of the plasticizer (2) relative to 100 parts by weight of the thermoplastic resin (2), or relative to 100 parts by weight of a sum of the polyvinyl acetal ionomer resin (2) and a thermoplastic resin other than the polyvinyl acetal ionomer resin (2) (hereinafter, sometimes described as the content (2)) in the second layer, and the content of the plasticizer (3) relative to 100 parts by weight of the thermoplastic resin (3), or relative to 100 parts by weight of a sum of the polyvinyl acetal ionomer resin (3) and a thermoplastic resin other than the polyvinyl acetal ionomer resin (3) (hereinafter, sometimes described as the content (3)) in the third layer is preferably 10 parts by weight or more, more preferably 15 parts by weight or more, and is preferably 40 parts by weight or less, more preferably 35 parts by weight or less, further preferably 32 parts by weight or less, particularly preferably 30 parts by weight or less. When the content (2) and the content (3) are the above-described lower limit or more, the flexibility of the resin film is enhanced and the handling of the resin film is facilitated. When the content (2) and the content (3) are the above-described upper limit or less, formation of the ionomer is less likely to be hindered, and excellent shock resistance at low temperature and self-repairability are attained, and further the penetration resistance of the laminated glass is enhanced.

In the first layer, the content of the plasticizer (1) relative to 100 parts by weight of the thermoplastic resin (1), or relative to 100 parts by weight of a sum of the polyvinyl acetal ionomer resin (1) and a thermoplastic resin other than the polyvinyl acetal ionomer resin (1) (hereinafter, sometimes described as the content (1)) is preferably 10 parts by weight or more, more preferably 20 parts by weight or more, further preferably 30 parts by weight or more and is preferably 90 parts by weight or less, more preferably 85 parts by weight or less, further preferably 80 parts by weight or less. When the content (1) is the above-described lower limit or more, the flexibility of the resin film is enhanced and the handling of the resin film is facilitated. When the content (1) is the above-described upper limit or less, formation of the ionomer is less likely to be hindered, and excellent shock resistance at low temperature and self-repairability are attained, and further the penetration resistance of the laminated glass further is enhanced.

For attaining the sound insulating properties of laminated glass, it is preferred that the content (1) be larger than the content (2) and it is preferred that the content (1) be larger than the content (3).

From the viewpoint of enhancing the sound insulating properties of laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, and further preferably 70 parts by weight or less.

### (Heat shielding compound)

It is preferred that the resin material and the resin film contain a heat shielding compound. It is preferred that the first layer contain a heat shielding compound. It is preferred that the second layer contain a heat shielding compound. It is preferred that the third layer contain a heat shielding compound. One kind of the heat shielding compound may be used alone, and two or more kinds thereof may be used in combination.

It is preferred that the heat shielding compound be constituted of at least one kind of Ingredient X among a phthalocyanine compound, a naphthalocyanine compound, and an anthracyanine compound or be constituted of heat shielding particles. In this case, the heat shielding compound may be constituted of both of the Ingredient X and the heat shielding particles.

### Ingredient X:

It is preferred that the resin material and the resin film contain at least one kind of Ingredient X among a phthalocyanine compound, a naphthalocyanine compound and an anthracyanine compound. It is preferred that the first layer contain the Ingredient X. It is preferred that the second layer contain the Ingredient X. It is preferred that the third layer contain the Ingredient X. The Ingredient X is a heat shielding compound. One kind of the Ingredient X may be used alone, and two or more kinds thereof may be used in combination.

The Ingredient X is not particularly limited. As the Ingredient X, conventionally known phthalocyanine compound, naphthalocyanine compound and anthracyanine compound can be used.

From the view point of further enhancing the heat shielding properties of the resin material, the resin film and laminated glass, it is preferred that the Ingredient X be at least one kind selected from the group consisting of phthalocyanine, a derivative of phthalocyanine, naphthalocyanine and a derivative of naphthalocyanine, and it is more preferred that the Ingredient X be at least one kind among phthalocyanine and a derivative of phthalocyanine.

From the viewpoints of effectively enhancing the heat shielding properties and maintaining the visible light transmittance at a higher level over a long period of time, it is preferred that the Ingredient X contain vanadium atoms or copper atoms. It is preferred that the Ingredient X contain vanadium atoms and it is also preferred that the Ingredient X contain copper atoms. It is more preferred that the Ingredient X be at least one kind among phthalocyanine containing vanadium atoms or copper atoms and a derivative of phthalocyanine containing vanadium atoms or copper atoms. From the view point of still further enhancing the heat shielding properties of the resin material, the resin film and laminated glass, it is preferred that the Ingredient X have a structural unit in which an oxygen atom is bonded to a vanadium atom.

In 100% by weight of the resin material, in 100% by weight of the resin film, and in 100% by weight of a layer containing the Ingredient X (a first layer, a second layer, or a third layer), the content of the Ingredient X is preferably 0.001% by weight or more, more preferably 0.005% by weight or more, further preferably 0.01% by weight or more, and particularly preferably 0.02% by weight or more and is preferably 0.2% by weight or less, more preferably 0.1% by weight or less, further preferably 0.05% by weight or less, and particularly preferably 0.04% by weight or less. When the content of the Ingredient X is the above-described lower limit or more and the above-described upper limit or less, the heat shielding properties are sufficiently enhanced and the visible light transmittance is sufficiently enhanced. For example, it is possible to make the visible light transmittance 70% or more.

### Heat shielding particles:

It is preferred that the resin material and the resin film contain heat shielding particles. It is preferred that the first layer contain the heat shielding particles. It is preferred that the second layer contain the heat shielding particles. It is preferred that the third layer contain the heat shielding particles. The heat shielding particle is of a heat shielding compound. By the use of heat shielding particles, infrared rays (heat rays) can be effectively cut off. One kind of the heat shielding particles may be used alone, and two or more kinds thereof may be used in combination.

From the viewpoint of further enhancing the heat shielding properties of the resin material, the resin film and laminated glass, it is more preferred that the heat shielding particles be metal oxide particles. It is preferred that the heat shielding particle be a particle (a metal oxide particle) formed from an oxide of a metal.

The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles and silicon-doped zinc oxide particles, lanthanum hexaboride (LaB₆) particles, and the like. Heat shielding particles other than these may be used. Since the heat ray shielding function is high, preferred are metal oxide particles, more preferred are ATO particles, GZO particles, IZO particles, ITO particles or tungsten oxide particles, and particularly preferred are ITO particles or tungsten oxide particles. In particular, since the heat ray shielding function is high and the particles are readily available, preferred are tin-doped indium oxide particles (ITO particles), and also preferred are tungsten oxide particles.

From the viewpoint of further enhancing the heat shielding properties of the resin material, the resin film and laminated glass, it is preferred that the tungsten oxide particles be metal-doped tungsten oxide particles. Examples of the "tungsten oxide particles" include metal-doped tungsten oxide particles. Specifically, examples of the metal-doped tungsten oxide particles include sodium-doped tungsten oxide particles, cesium-doped tungsten oxide particles, thallium-doped tungsten oxide particles, rubidium-doped tungsten oxide particles, and the like.

From the viewpoint of further enhancing the heat shielding properties of the resin material, the resin film and laminated glass, cesium-doped tungsten oxide particles are particularly preferred. From the viewpoint of further enhancing the heat shielding properties of the resin film and laminated glass, it is preferred that the cesium-doped tungsten oxide particles be tungsten oxide particles represented by the formula: Cs_{0.33}WO₃.

The average particle diameter of the heat shielding particles is preferably 0.01 µm or more, and more preferably 0.02 µm or more and is preferably 0.1 µm or less, and more preferably 0.05 µm or less. When the average particle diameter is the above-described lower limit or more, the heat ray shielding properties are sufficiently enhanced. When the average particle diameter is the above-described upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the resin material, in 100% by weight of the resin film and in 100% by weight of a layer containing the heat shielding particles (a first layer, a second layer, or a third layer), the content of the heat shielding particles is preferably 0.01% by weight or more, more preferably 0.1% by weight or more, further preferably 1% by weight or more, and especially preferably 1.5% by weight or more and is preferably 6% by weight or less, more preferably 5.5% by weight or less, further preferably 4% by weight or less, especially preferably 3.5% by weight or less, and most preferably 3% by weight or less. When the content of the heat shielding particles is the above-described lower limit or more and the above-described upper limit or less, the heat shielding properties are sufficiently enhanced and the visible light transmittance is sufficiently enhanced.

### (Metal salt)

It is preferred that the resin material and the resin film contain at least one kind of metal salt (hereinafter, sometimes described as Metal salt M) among a magnesium salt, an alkali metal salt and an alkaline earth metal salt. It is preferred that the first layer contain the Metal salt M. It is preferred that the second layer contain the Metal salt M. It is preferred that the third layer contain the Metal salt M. It is preferred that the surface layer contain the Metal salt M. By the use of the Metal salt M, controlling the adhesivity between the resin film and a lamination glass member or the adhesivity between respective layers in the resin film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt contained in the resin film contain at least one kind of metal among K and Mg.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

A sum of contents of Mg and K in 100% by weight of the resin material, in 100% by weight of the resin film and in a layer containing the Metal salt M (a first layer, a second layer, or a third layer) is preferably 5 ppm or more, more preferably 10 ppm or more, and further preferably 20 ppm or more and is preferably 300 ppm or less, more preferably 250 ppm or less, and further preferably 200 ppm or less. When the sum of the contents of Mg and K is the above-described lower limit or more and the above-described upper limit or less, the adhesivity between the resin film and a lamination glass member or the adhesivity between respective layers in the resin film can be further well controlled.

### (Ultraviolet ray screening agent)

It is preferred that the resin material and the resin film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, even when the resin film and the laminated glass are used for a long period of time, the visible light transmittance becomes further difficult to be lowered. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure or an ultraviolet ray screening agent having a benzoate structure, more preferably an ultraviolet ray screening agent having a benzotriazole structure or an ultraviolet ray screening agent having a benzophenone structure, and further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface thereof may be coated with any material. Examples of the coating material for the surface of the ultraviolet ray screening agent containing a metal oxide include an insulating metal oxide, a hydrolyzable organosilicon compound, a silicone compound, and the like.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray absorbing performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include oxalic acid diamides having a substituted aryl group and the like on the nitrogen atom, such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

From the viewpoint of further suppressing the lowering in visible light transmittance after the lapse of a certain period of time, in 100% by weight of the resin material, in 100% by weight of the resin film and in 100% by weight of a layer containing the ultraviolet ray screening agent (a first layer, a second layer, or a third layer), the content of the ultraviolet ray screening agent is preferably 0.1% by weight or more, more preferably 0.2% by weight or more, further preferably 0.3% by weight or more, particularly preferably 0.5% by weight or more, preferably 2.5% by weight or less, more preferably 2% by weight or less, further preferably 1% by weight or less and particularly preferably 0.8% by weight or less. In particular, by setting the content of the ultraviolet ray screening agent to be 0.2% by weight or more in 100% by weight of a layer containing the ultraviolet ray screening agent, with regard to the resin film and laminated glass, the lowering in visible light transmittance thereof after the lapse of a certain period of time can be significantly suppressed.

### (Oxidation inhibitor)

It is preferred that the resin material and the resin film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy) phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

For maintaining high visible light transmittance of the resin material, resin film and laminated glass over a long period of time, it is preferred that the content of the oxidation inhibitor be 0.1% by weight or more in 100% by weight of the resin material, in 100% by weight of the resin film, and in 100% by weight of the layer containing the oxidation inhibitor (a first layer, a second layer, or a third layer). Moreover, since an effect commensurate with the addition of the oxidation inhibitor is not attained, it is preferred that the content of the oxidation inhibitor be 2% by weight or less in 100% by weight of the resin film and in 100% by weight of the layer containing the oxidation inhibitor.

### (Other ingredients)

Each of the resin material, the resin film, the first layer, the second layer, and the third layer may contain additives such as a coupling agent containing silicon, aluminum or titanium, a dispersing agent, a surfactant, a flame retardant, an antistatic agent, a pigment, a dye, a moisture-resistance improving agent, a fluorescent brightening agent, and an infrared ray absorber, as necessary. One kind of these additives may be used alone, and two or more kinds thereof may be used in combination.

### (Other details of polyvinyl acetal ionomer resin film)

The thickness of the resin film is not particularly limited. From the viewpoint of the practical aspect and the viewpoint of sufficiently enhancing the penetration resistance and the flexural rigidity of laminated glass, the thickness of the resin film is preferably 0.1 mm or more, more preferably 0.25 mm or more, preferably 3 mm or less and more preferably 1.5 mm or less. When the thickness of the resin film is the above-described lower limit or more, the penetration resistance and the flexural rigidity of laminated glass are enhanced. When the thickness of the resin film is the above-described upper limit or less, the transparency of the resin film is further improved.

The thickness of the resin film is designated as T. The thickness of the first layer is preferably 0.035T or more, more preferably 0.0625T or more, further preferably 0.1T or more and is preferably 0.4T or less, more preferably 0.375T or less, further preferably 0.25T or less, particularly preferably 0.15T or less. When the thickness of the first layer is 0.4T or less, the flexural rigidity is further improved.

The thickness of each of the second layer and the third layer is preferably 0.3T or more, more preferably 0.3125T or more, further preferably 0.375T or more and is preferably 0.97T or less, more preferably 0.9375T or less, further preferably 0.9T or less. The thickness of each of the second layer and the third layer may be 0.46875T or less, and may be 0.45T or less. When the thickness of each of the second layer and the third layer is the above-described lower limit or more and the above-described upper limit or less, the rigidity and the sound insulating properties of the resin film and laminated glass are further enhanced.

A total thickness of the second layer and the third layer is preferably 0.625T or more, more preferably 0.75T or more, further preferably 0.85T or more and is preferably 0.97T or less, more preferably 0.9375T or less, further preferably 0.9T or less. When the total thickness of the second layer and the third layer is the above-described lower limit or more and the above-described upper limit or less, the rigidity and the sound insulating properties of the resin film and laminated glass are further enhanced.

The interlayer film may be an interlayer film having a uniform thickness, or may be an interlayer film having varying thickness. The sectional shape of the interlayer film may be a rectangular shape and may be a wedge-like shape.

The method for producing the resin film according to the present invention is not particularly limited. In the case of a single-layered resin film, examples of the production method of the resin film according to the present invention include a method of extruding a resin material with an extruder. In the case of a multi-layered resin film, examples of the production method of the resin film according to the present invention include a method of separately forming resin materials used for constituting respective layers into respective layers, and then, for example, layering the obtained layers, a method of coextruding resin materials used for constituting respective layers with an extruder and layering the layers, and the like. A production method of extrusion-molding is preferred because the method is suitable for continuous production.

For the excellent production efficiency of the resin film, it is preferred that the second layer and the third layer contain the same polyvinyl acetal resin, it is more preferred that the second layer and the third layer contain the same polyvinyl acetal resin and the same plasticizer, it is preferred that the second layer and the third layer contain the same polyvinyl acetal ionomer resin, it is more preferred that the second layer and the third layer contain the same polyvinyl acetal ionomer resin and the same plasticizer, and it is further preferred that the second layer and the third layer be formed of the same resin material.

It is preferred that the resin film have a protrusions and recesses shape in at least one surface of the surfaces of both sides. It is preferred that the resin film have a protrusions and recesses shape in surfaces of both sides. Examples of the method for forming the protrusions and recesses shape include, but are not particularly limited to, a lip emboss method, an emboss roll method, a calender roll method, and a contour extrusion method. The emboss roll method is preferred because a large number of embosses of the protrusions and recesses shape, which is a quantitatively constant protrusions and recesses pattern, can be formed.

### (Laminated glass)

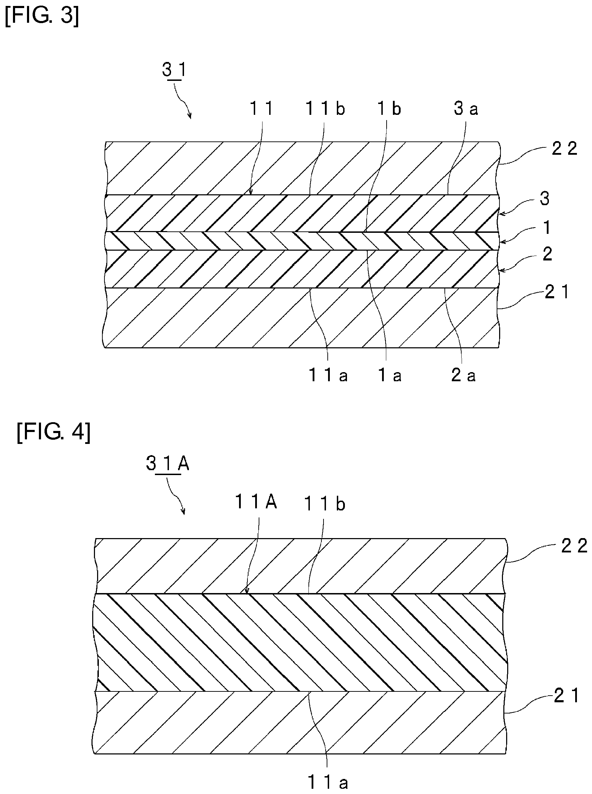

Fig. 3 is a sectional view schematically showing one example of laminated glass prepared with the polyvinyl acetal ionomer resin film shown in Fig. 1.

A laminated glass 31 shown in Fig. 3 is provided with a first lamination glass member 21, a second lamination glass member 22 and a resin film 11. The resin film 11 is arranged between the first lamination glass member 21 and the second lamination glass member 22 to be sandwiched therebetween.

The first lamination glass member 21 is layered on a first surface 11a of the resin film 11. The second lamination glass member 22 is layered on a second surface 11b opposite to the first surface 11a of the resin film 11. The first lamination glass member 21 is layered on an outer surface 2a of the second layer 2. The second lamination glass member 22 is layered on an outer surface 3a of a third layer 3.

Fig. 4 is a sectional view schematically showing one example of laminated glass prepared with the polyvinyl acetal ionomer resin film shown in Fig. 2.

A laminated glass 31A shown in Fig. 4 is provided with the first lamination glass member 21, the second lamination glass member 22 and the resin film 11A. The resin film 11A is arranged between the first lamination glass member 21 and the second lamination glass member 22 to be sandwiched therebetween.

The first lamination glass member 21 is layered on the first surface 11a of the resin film 11A. The second lamination glass member 22 is layered on the second surface 11b opposite to the first surface 11a of the resin film 11A.

Thus, the laminated glass according to the present invention includes the first lamination glass member, the second lamination glass member, and the resin film, and the resin film is a polyvinyl acetal ionomer resin film according to the present invention. In the laminated glass according to the present invention, the resin film is arranged between the first lamination glass member and the second lamination glass member.

It is preferred that the first lamination glass member be the first glass plate. It is preferred that the second lamination glass member be the second glass plate.

Examples of the lamination glass member include a glass plate, a PET (polyethylene terephthalate) film, and the like. As the laminated glass, laminated glass in which a resin film is sandwiched between a glass plate and a PET film or the like, as well as laminated glass in which a resin film is sandwiched between two glass plates, is included. The laminated glass is a laminate provided with a glass plate, and it is preferred that at least one glass plate be used. It is preferred that each of the first lamination glass member and the second lamination glass member be a glass plate or a PET film, and the laminated glass be provided with a glass plate as at least one among the first lamination glass member and the second lamination glass member.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more, preferably 5 mm or less and more preferably 3 mm or less. Moreover, when the lamination glass member is a glass plate, the thickness of the glass plate is preferably 0.5 mm or more, more preferably 0.7 mm or more, preferably 5 mm or less and more preferably 3 mm or less. When the lamination glass member is a PET film, the thickness of the PET film is preferably 0.03 mm or more and preferably 0.5 mm or less.

By using the resin film according to the present invention, it is possible to keep the flexural rigidity of the laminated glass high even when the thickness of the laminated glass is small. From the view point of lightening the laminated glass, lessening the material of the laminated glass to reduce the environmental load, and improving the fuel consumption of automobiles by lightening of the laminated glass to reduce the environmental load, the thickness of the glass plate is preferably 2 mm or less, more preferably 1.8 mm or less, still more preferably 1.5 mm or less, further preferably 1.3 mm or less, still further preferably 1.0 mm or less, particularly preferably 0.7 mm or less. From the view point of lightening the laminated glass, lessening the material of the laminated glass to reduce the environmental load, and improving the fuel consumption of automobiles by lightening of the laminated glass to reduce the environmental load, a sum of the thickness of the first glass plate and the thickness of the second glass plate is preferably 3.2 mm or less, more preferably 3 mm or less, further preferably 2.8 mm or less.

The method for producing the laminated glass is not particularly limited. For example, the resin film is sandwiched between the first lamination glass member and the second lamination glass member, and then, passed through pressure rolls or subjected to decompression suction in a rubber bag, so that the air remaining between the first and the second lamination glass members and the resin film is removed to obtain a laminate. Then, the laminate is preliminarily bonded at about 70 to 110°C to obtain a preliminarily bonded body. Next, by putting the preliminarily bonded body into an autoclave or by pressing the laminate, the members are press-bonded together at about 120 to 150°C and under a pressure of 1 to 1.5 MPa. In this way, laminated glass can be obtained. At the time of producing the laminated glass, a first layer, a second layer, and a third layer may be layered.

Each of the resin film and the laminated glass can be used for automobiles, railway vehicles, aircraft, ships, buildings and the like. Each of the resin film and the laminated glass can also be used for applications other than these applications. It is preferred that the resin film and the laminated glass be a resin film and laminated glass for vehicles or for building respectively, and it is more preferred that the resin film and the laminated glass be a resin film and laminated glass for vehicles respectively. Each of the resin film and the laminated glass can be used for a windshield, side glass, rear glass, or roof glass of an automobile, and the like. The resin film and the laminated glass are suitably used for automobiles. The resin film is used for obtaining laminated glass of an automobile.

Hereinafter, the present invention will be described in more detail with reference to examples. The present invention is not limited only to these examples.

The following materials were prepared.

### (Polyvinyl acetal ionomer resin, and polyvinyl acetal resin)

The polyvinyl acetal ionomer resins and polyvinyl acetal resins shown in Tables 1 to 3 below were appropriately used. Specifically, the polyvinyl acetal ionomer resin used in Example 1 is obtained in the following manner.

### (Polyvinyl acetal resin used in Example 1)

In a reaction vessel equipped with a thermometer, a stirrer, a nitrogen introducing tube, and a condenser, 200 parts by weight of polyvinyl alcohol (average degree of polymerization: 800, saponification degree: 98.9% by mole), and 1600 parts by weight of distilled water were charged, and dissolved by heating under stirring to obtain a solution. Next, to the resultant solution, 50 parts by weight of 35 wt% hydrochloric acid was added as a catalyst, and then 30 parts by weight of n-butyraldehyde was added under stirring, to give precipitation of a white particulate polyvinyl butyral resin. Then, the solution was aged by being retained at 50°C for 2 hours. Then, the solution was cooled, and neutralized, and then the polyvinyl butyral resin was washed with water, and dried, to obtain a polyvinyl acetal resin.

### (Polyvinyl acetal ionomer resin used in Example 1)

Introduction of group that can become an ionic functional group by post acetalization, and ionomerization

In a reaction vessel equipped with a thermometer, a stirrer, a nitrogen introducing tube, and a condenser, 20 parts by weight of polyvinyl butyral (average degree of polymerization: 800, butyralization degree: 68.0% by mole, content of the hydroxyl group: 30.8% by mole, acetylation degree: 1.2% by mole), and 100 parts by weight of methanol were added, and polyvinyl butyral was dissolved under stirring. Next, terephthalic aldehyde acid was added, and dissolved, and then 0.1 parts by weight of 35 wt% hydrochloric acid was added, and heated to 60°C under stirring in a reaction vessel. The elevation of the temperature was followed by reaction at 60°C for 2 hours.

Then, by cooling the reaction liquid, a solution having solid contents of 20% by weight containing a polyvinyl acetal resin having a group that can become an ionic functional group was obtained. To the obtained solution sodium methoxide was added so that the degree of neutralization was 54%. The degree of neutralization was calculated from the heights of signals of a carboxyl group (1715 cm⁻¹) and a metal base of carboxyl group (1550 cm⁻¹ in the case of Na), measured by using an FTIR apparatus "NICOLET 6700" (available from Thermo Scientific) at a measurement wavelength ranging from 4000 to 400 cm⁻¹, with a scanning number of times of 32.

The obtained polyvinyl acetal resin having a group that can become an ionic functional group was dissolved in dimethyl sulfoxide, and subjected to measurement of proton NMR, and thus a composition after the reaction was calculated. In the composition after the reaction, the content of the hydroxyl group was 29.4% by mole, the acetylation degree was 1.1% by mole, the butyralization degree was 62.3% by mole, the group that can become an ionic functional group was 3.6% by mole, and the meso percentage was 91.8%. The weight average molecular weight on the polystyrene equivalent basis measured by the GPC method using "2690 Separations Model" available from Waters as a column was 160000.

In Examples and Comparative Examples other than Example 1, polymerization degree of polyvinyl alcohol (PVA), kind of aldehyde used for acetalization (types of acetalization include Bu: butyralization, Ac: acetoacetalization, Bz: benzacetalization, EH: 2-ethylhexylacetalization), content of hydroxyl group, acetylation degree, acetalization degree, kind of ionic functional group, content of ionic functional group, metal species used for neutralization, degree of neutralization, meso percentage, and weight average molecular weight were set as shown in Tables 1 to 3. In Examples 1 to 5 and 23, a group that can become an ionic functional group was introduced into the polyvinyl acetal resin by the post acetalization, and in other Examples and Comparative Examples, a group that can become an ionic functional group was introduced by a method of copolymerizing vinyl acetate monomer and acrylic acid, followed by saponification and acetalization. In Comparative Example 5, aging at 30°C was conducted for 10 minutes at the time of preparation of the polyvinyl acetal resin.

### (Plasticizer)

Triethylene glycol di-2-ethylhexanoate (3GO)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Examples 1 to 37 and Comparative Examples 1 to 5)

A resin film (760 µm thick) was prepared by mixing a kind and an amount of the polyvinyl acetal ionomer resin or the polyvinyl acetal resin shown in Tables 1 to 3, a kind and an amount of the plasticizer shown in Tables 1 to 3, the ultraviolet ray screening agent (Tinuvin326) in such an amount that is to be 0.2% by weight in the resin film to be obtained, and the oxidation inhibitor (BHT) in such an amount that is to be 0.2% by weight in the resin film to be obtained, and extruding the mixture with an extruder.

### (Evaluation)

### (1) Shock resistance at low temperature

The obtained resin film was thermally molded to prepare a resin film in the shape of a regular hexahedron 5 mm on side. After immersing the resin film in liquid nitrogen for 10 minutes, the resin film was taken out. On the basis of the condition after 10 hits of the immersed resin film with a hammer, the shock resistance at low temperature was judged according to the following criteria.

### [Criteria for judgement in shock resistance at low temperature]

○: No cracking
Δ: Some cracking
×: Crushed

### (2) Self-repairability

The surface of the obtained resin film was scratched with a razor, and the position of the scratch having a depth of 2 µm ± 500 nm was verified with an atomic force microscope, and stored for 1 week at 23°C and at a humidity of 50% humid. After the storage, the depth of the scratch at the same position was measured with the atomic force microscope. The self-repairability was judged according to the following criteria.

### [Criteria for judgement in self-repairability]

○: Depth decreased by 20 nm or more after storage
Δ: Depth decreased by 10 nm or more and lower than 20 nm after storage
×: Depth not decreased or decreased by less than 10 mm

The details and the results are shown in the following Tables 1 to 3. In this connection, in Tables 1 to 3, the description of the ultraviolet ray screening agent and the oxidation inhibitor was omitted.

**[Table 1]**

| | Composition | | | | | | | | | | | | | | Evaluation | |
|---|---|---|---|---|---|---|---|---|---|---|---|---|---|---|---|---|
| | Polyvinyl acetal ionomer resin, or polyvinyl acetal resin | | | | | | | | | | | | Plasticizer | | Shock resistance at low temperature | Self-repairability |
| | Kind | | | | | | | | | | | Content | Kind | content | | |
| | Polymerization degree | Type of acetalization | Content of hydroxyl group (mol%) | Acetylation degree (mol%) | Acetalization degree (mol%) | Kind of ionic functional group | Content of ionic functional group (mol%) | Metal species | Degree of neutralization (%) | Meso percentage (%) | Weight average molecular weight | Parts by weight | | Parts by weight | | |
| Example 1 | 800 | Bu | 29.4 | 1.1 | 62.3 | Carboxyl group | 3.6 | Na | 54 | 91.8 | 160000 | 100 | 3GO | 20 | ○ | ○ |
| Example 2 | 800 | Bu | 28.8 | 0.9 | 62.1 | Sulfonic group | 4.1 | Na | 53 | 93.1 | 160000 | 100 | 3GO | 20 | ○ | ○ |
| Example 3 | 800 | Bu | 30.2 | 0.6 | 61.8 | Amino group | 3.7 | Zn | 52 | 92.3 | 170000 | 100 | 3GO | 20 | ○ | ○ |
| Example 4 | 800 | Bu | 30.4 | 0.5 | 62.1 | Phosphoric group | 3.5 | Na | 54 | 91.8 | 160000 | 100 | 3GO | 20 | ○ | ○ |
| Example 5 | 800 | Bu | 27.2 | 0.8 | 68.6 | Carboxyl group | 3.4 | Na | 30 | 90.2 | 150000 | 100 | 3GO | 20 | ○ | ○ |
| Example 6 | 800 | Bu | 27.2 | 0.8 | 68.6 | Carboxyl group | 3.4 | Na | 15 | 90.5 | 150000 | 100 | 3GO | 20 | Δ | ○ |
| Example 7 | 200 | Bu | 24.4 | 1.1 | 69.1 | Carboxyl group | 5.4 | Na | 54 | 89.9 | 80000 | 100 | | 0 | Δ | Δ |
| Example 8 | 500 | Bu | 26.5 | 0.9 | 67.8 | Carboxyl group | 4.8 | Na | 51 | 90.3 | 120000 | 100 | 3GO | 20 | ○ | ○ |
| Example 9 | 1700 | Bu | 27.8 | 0.6 | 67.5 | Carboxyl group | 4.1 | Na | 70 | 90.1 | 270000 | 100 | 3GO | 40 | ○ | ○ |
| Example 10 | 1700 | Bu | 27.8 | 0.6 | 67.5 | Carboxyl group | 4.1 | Na | 92 | 88.4 | 260000 | 100 | 3GO | 40 | ○ | ○ |
| Example 11 | 1700 | Bu | 27.8 | 0.6 | 67.5 | Carboxyl group | 4.1 | Na | 30 | 90.2 | 280000 | 100 | 3GO | 40 | ○ | ○ |
| Example 12 | 1700 | Bu | 27.8 | 0.6 | 67.5 | Carboxyl group | 4.1 | Na | 12 | 86.9 | 280000 | 100 | 3GO | 40 | Δ | ○ |
| Example 13 | 1700 | Bu | 27.8 | 0.6 | 67.5 | Carboxyl group | 4.1 | Na | 48 | 88.7 | 270000 | 100 | 3GO | 40 | ○ | ○ |
| Example 14 | 1700 | Bu | 27.8 | 0.6 | 67.5 | Carboxyl group | 4.1 | Na | 88 | 88.9 | 270000 | 100 | 3GO | 40 | ○ | ○ |
| Example 15 | 1700 | Bu | 27.8 | 0.6 | 67.5 | Carboxyl group | 4.1 | Zn | 52 | 89.7 | 280000 | 100 | 3GO | 40 | ○ | ○ |

**[Table 2]**

| | Composition | | | | | | | | | | | | | | Evaluation | |
|---|---|---|---|---|---|---|---|---|---|---|---|---|---|---|---|---|
| | Polyvinyl acetal ionomer resin, or polyvinyl acetal resin | | | | | | | | | | | | plasticizer | | Shock resistance at low temperature | Self-repairability |
| | Kind | | | | | | | | | | | Content | Kind | Content | | |
| | Polymerization degree | Type of acetalization | Content of hydroxyl group (mol%) | Acetylation degree (mol%) | Acetalization degree (mol%) | Kind of ionic functional group | Content of ionic functional group (mol%) | Metal species | Degree of neutralization (%) | Meso percentage (%) | Weight average molecular weight | Parts by weight | | Parts by weight | | |
| Example 16 | 1700 | Bu | 27.8 | 0.6 | 67.5 | Carboxyl group | 4.1 | K | 52 | 88.6 | 270000 | 100 | 3GO | 40 | ○ | ○ |
| Example 17 | 1700 | Bu | 27.8 | 0.6 | 67.5 | Carboxyl group | 4.1 | Li | 49 | 86.7 | 270000 | 100 | 3GO | 40 | ○ | ○ |
| Example 18 | 1700 | Bu | 27.8 | 0.6 | 67.5 | Carboxyl group | 4.1 | Mg | 52 | 87.3 | 260000 | 100 | 3GO | 40 | ○ | ○ |
| Example 19 | 1700 | Bu | 27.8 | 0.6 | 67.5 | Carboxyl group | 4.1 | Co | 45 | 88.9 | 270000 | 100 | 3GO | 40 | ○ | ○ |
| Example 20 | 1700 | Bu | 27.8 | 0.6 | 67.5 | Carboxyl group | 4.1 | Cu | 44 | 86.9 | 280000 | 100 | 3GO | 40 | ○ | ○ |
| Example 21 | 1700 | Bu | 27.8 | 0.6 | 67.5 | Carboxyl group | 4.1 | Mn | 51 | 87.8 | 270000 | 100 | 3GO | 40 | ○ | ○ |
| Example 22 | 1700 | Bu | 22.1 | 0.6 | 68.6 | Carboxyl group | 8.7 | Na | 22 | 89.2 | 280000 | 100 | 3GO | 40 | ○ | ○ |
| Example 23 | 1700 | Bu | 30.4 | 0.6 | 67.2 | Sulfonic group | 1.8 | Na | 76 | 92.3 | 270000 | 100 | 3GO | 40 | ○ | ○ |
| Example 24 | 1700 | Bu | 25.1 | 0.6 | 62.3 | Carboxyl group | 12 | Na | 13 | 88.4 | 270000 | 100 | 3GO | 40 | Δ | ○ |
| Example 25 | 1700 | Ac | 27.8 | 0.6 | 67.5 | Carboxyl group | 4.1 | Na | 48 | 87.8 | 280000 | 100 | 3GO | 50 | ○ | ○ |
| Example 26 | 1700 | Bu, Ac | 27.8 | 0.6 | 67.5 | Carboxyl group | 4.1 | Na | 51 | 86.7 | 270000 | 100 | 3GO | 40 | ○ | ○ |
| Example 27 | 1700 | Bu, Bz | 27.8 | 0.6 | 67.5 | Carboxyl group | 4.1 | Na | 52 | 86.4 | 260000 | 100 | 3GO | 40 | ○ | ○ |
| Example 28 | 1700 | Bu, EH | 27.8 | 0.6 | 67.5 | Carboxyl group | 4.1 | Na | 52 | 88.8 | 270000 | 100 | 3GO | 20 | ○ | ○ |
| Example 29 | 1700 | Bz | 27.8 | 0.6 | 67.5 | Carboxyl group | 4.1 | Na | 52 | 89.1 | 270000 | 100 | 3GO | 40 | ○ | ○ |
| Example 30 | 1700 | EH | 27.8 | 0.6 | 67.5 | Carboxyl group | 4.1 | Na | 49 | 87.8 | 270000 | 100 | | ○ | ○ | Δ |

**[Table 3]**

| | Composition | | | | | | | | | | | | | | Evaluation | |
|---|---|---|---|---|---|---|---|---|---|---|---|---|---|---|---|---|
| | Polyvinyl acetal ionomer resin, or polyvinyl acetal resin | | | | | | | | | | | | Plasticizer | | Shock resistance at low temperature | Self-repairability |
| | Kind | | | | | | | | | | | Content | Kind | Content | | |
| | Polymerization degree | Type of acetalization | Content of hydroxyl group (mol%) | Acetylation degree (mol%) | Acetalization degree (mol%) | Kind of ionic functional group | Content of ionic functional group (mol%) | Metal species | Degree of neutralization (%) | Meso percentage (%) | Weight average molecular weight | Parts by weight | | Parts by weight | | |
| Example 31 | 1700 | Bu | 13.5 | 12.1 | 70.3 | Carboxyl group | 4.1 | Na | 49 | 83.8 | 280000 | 100 | 3GO | 10 | ○ | ○ |
| Example 32 | 1700 | Bu | 8.4 | 21.3 | 66.2 | Carboxyl group | 4.1 | Na | 52 | 82.1 | 270000 | 100 | 3GO | 10 | ○ | Δ |
| Example 33 | 1700 | Bu | 27.8 | 0.6 | 67.5 | Carboxyl group | 4.1 | Na | 45 | 88.8 | 270000 | 100 | DOP | 10 | Δ | Δ |
| Example 34 | 1700 | Bu | 27.8 | 0.6 | 67.5 | Carboxyl group | 4.1 | Na | 44 | 88.9 | 270000 | 100 | DOB | 10 | Δ | Δ |
| Example 35 | 1700 | Bu | 38.6 | 0.6 | 57.4 | Carboxyl group | 3.4 | Na | 53 | 88.5 | 270000 | 100 | 3GO | 40 | Δ | ○ |
| Example 36 | 2000 | Bu | 28.5 | 0.5 | 68.1 | Carboxyl group | 2.9 | Na | 52 | 87.5 | 330000 | 100 | 3GO | 40 | ○ | ○ |
| Example 37 | 3300 | Bu | 24.6 | 0.5 | 72.5 | Carboxyl group | 2.4 | Na | 52 | 87.4 | 370000 | 100 | 3GO | 40 | ○ | ○ |
| Comparative Example 1 | 1700 | Bu | 27.8 | 0.6 | 67.5 | - | - | - | - | 88.4 | 270000 | 100 | 3GO | 40 | × | × |
| Comparative Example 2 | 1700 | Bu | 27.8 | 0.6 | 67.5 | Carboxyl group | 4.1 | - | - | 87.6 | 270000 | 100 | 3GO | 40 | × | × |
| Comparative Example 3 | 1700 | Bu | 27.8 | 0.6 | 67.5 | Carboxyl group | 4.1 | Na | 5 | 88.6 | 260000 | 100 | 3GO | 40 | × | × |
| Comparative Example 4 | 1700 | Bu | 27.8 | 0.6 | 67.5 | Carboxyl group | 4.1 | Na | 95 | 88.8 | 280000 | 100 | 3GO | 40 | × | × |
| Comparative Example 5 | 1700 | Bu | 27.8 | 0.6 | 67.5 | Carboxyl group | 4.1 | Na | 52 | 78.8 | 270000 | 100 | 3GO | 40 | × | × |

### EXPLANATION OF SYMBOLS

1: First layer
1a: First surface
1b: Second surface
2: Second layer
2a: Outer surface
3: Third layer
3a: Outer surface
11: Resin film (polyvinyl acetal ionomer resin film)
11A: Resin film (polyvinyl acetal ionomer resin film, first layer)
11a: First surface
11b: Second surface
21: First lamination glass member
22: Second lamination glass member
31: Laminated glass
31A: Laminated glass

## Claims

1. A polyvinyl acetal ionomer resin material comprising:
a polyvinyl acetal ionomer resin having an ionic functional group and having a metal in an amount that makes a degree of neutralization be 10% or more and 90% or less,
the polyvinyl acetal ionomer resin having a meso percentage of acetal ring structure of 80% or more.

2. The polyvinyl acetal ionomer resin material according to claim 1, wherein the polyvinyl acetal ionomer resin has a content of the ionic functional group of 10% by mole or less.

3. The polyvinyl acetal ionomer resin material according to claim 1 or 2, wherein the ionic functional group is a carboxyl group, a base of carboxyl group, a sulfonic acid group, a base of sulfonic acid group, a sulfinic acid group, a base of sulfinic acid group, a sulfenic acid group, a base of sulfenic acid group, a phosphoric acid group, a base of phosphoric acid group, a phosphonic acid group, a base of phosphonic acid group, an amino group, or a base of amino group.

4. The polyvinyl acetal ionomer resin material according to any one of claims 1 to 3, wherein the metal is Na, Li, K, Mg, Zn, Cu, Co, Al, Fe, Ni, Cr, or Mn.

5. The polyvinyl acetal ionomer resin material according to any one of claims 1 to 4, wherein the polyvinyl acetal ionomer resin has a content of hydroxyl group of 10% by mole or more and 35% by mole or less.

6. The polyvinyl acetal ionomer resin material according to any one of claims 1 to 5, wherein the acetal group of the polyvinyl acetal ionomer resin is a formal group, an acetoacetal group, a butyral group, a cylohexyl acetal group, a 2-ethylhexyl acetal group, or a benzacetal group.

7. The polyvinyl acetal ionomer resin material according to any one of claims 1 to 6, wherein the polyvinyl acetal ionomer resin has a weight average molecular weight of 100000 or more and 500000 or less.

8. The polyvinyl acetal ionomer resin material according to any one of claims 1 to 7, comprising a polyvinyl acetal resin not having an ionic functional group.

9. The polyvinyl acetal ionomer resin material according to claim 8, wherein a content of the polyvinyl acetal ionomer resin in 100% by weight of a sum of the polyvinyl acetal ionomer resin and the polyvinyl acetal resin is 50% by weight or more.

10. The polyvinyl acetal ionomer resin material according to any one of claims 1 to 9, comprising a plasticizer.

11. The polyvinyl acetal ionomer resin material according to claim 10, wherein a content of the plasticizer relative to 100 parts by weight of a sum of the polyvinyl acetal ionomer resin and a thermoplastic resin other than the polyvinyl acetal ionomer resin is 10 parts by weight or more.

12. The polyvinyl acetal ionomer resin material according to claim 10 or 11, wherein the plasticizer includes triethylene glycol-di-2-ethylhexanoate.

13. A polyvinyl acetal ionomer resin film, that is a molded body of the polyvinyl acetal ionomer resin material according to any one of claims 1 to 12.

14. The polyvinyl acetal ionomer resin film according to claim 13, that is an interlayer film for laminated glass used for obtaining laminated glass.

15. A laminated glass comprising:
a first lamination glass member,
a second lamination glass member, and
the polyvinyl acetal ionomer resin film according to claim 13 or 14,
the polyvinyl acetal ionomer resin film being arranged between the first lamination glass member and the second lamination glass member.
